# EUROPÄISCHE PATENTSCHRIFT

(11) **EP 0 638 733 B1**
(45) Veröffentlichungstag und Bekanntmachung des Hinweises auf die Patenterteilung: **19.11.1997**
(21) Anmeldenummer: 94112237.6
(22) Anmeldetag: 04.08.1994
(51) Int. Cl.: F16C 1/22, B60T 11/04

(54) **Vorrichtung zur Längeneinstellung von mechanisch-flexiblen Fernbetätigungen o. dgl.**
Device for length adjustment of flexible mechanical remote controls or the like
Dispositif d'ajustage de la longueur de télécommandes mécaniques flexibles ou de choses pareilles

(30) Priorität: 04.08.1993 DE 4326077
(43) Veröffentlichungstag der Anmeldung: 15.02.1995
(73) Patentinhaber: KÜSTER & Co. GmbH, 35630 Ehringshausen (DE)
(72) Erfinder: Hilgert, Günter, D-35584 Wetzlar (DE); Krug, Michael, D-35614 Asslar (DE)
(74) Vertreter: Müller, Eckhard, Dr.

(56) Entgegenhaltungen:
- EP-A- 0 342 994
- DE-A- 3 929 298
- DE-A- 4 131 160
- US-A- 4 598 809

## Beschreibung

Die Erfindung bezieht sich auf eine Vorrichtung zur Längeneinstellung von mechanisch-flexiblen Fernbetätigungen o. dgl. nach dem Oberbegriff des Anspruches 1.

Aus der US-A-4 598 809 ist bereits eine derartige Vorrichtung bekannt, welche ein hohlstabförmiges und ein rohrförmiges Teil aufweist, die ineinander schiebbar sind und in unterschiedlichen Einschubtiefen einander gegenüber festlegbar sind. Das hohlstabförmige Teil weist an seinem freien Ende eine Aufnahme für die Außenhülle des Betätigungszuges auf, dessen Innenzug sich durch das hohlstabförmige Teil und das rohrförmige Teil erstreckt. Über das hohlstabförmige Teil und das rohrförmige Teil ist ein hülsenförmiges Teil geschoben und mit dem rohrförmigen Teil verbunden. Dabei ist das rohrförmige Teil axial bewegbar aber unverlierbar in dem hülsenförmigen Teil gehalten. Im Bereich des hohlstabförmigen Teils weist das hülsenförmige Teil eine konische Anlaqefläche auf, an der ein ringförmig ausgebildetes und über das hohlstabförmige Teil geschobenes Rastelement mit einer radial äußeren konischen Anlagefläche gleitet und mittels einer Druckfeder in Raststellung an dem hohlstabförmigen Teil gehalten ist. Diese bekannte Vorrichtung ist konstruktiv recht kompliziert aufgebaut und weist insbesondere eine Vielzahl von Einzelteilen auf. Desweiteren sind bei dieser Vorrichtung Maßnahmen für eine Schnelleinstellung nicht vorgesehen.

Weiterhin sind bereits Einstellvorrichtungen für Bremsseilzüge von Kraftfahrzeugen bekannt, welche einer Ersteinstellung oder einer selbsttätigen Nachstellung bei Auftreten einer Lose des in einer Außenhülle bzw. eines Schlauches des Bremszuges geführten Bremsseiles dienen. Die Einstellvorrichtungen bewirken überwiegend eine Längenvariation der Außenhülle bzw. des Schlauches des Bremszuges. Die bekannten Einstellvorrichtungen bestehen wenigstens aus zwei rohrförmig ausgebildeten und ineinander schiebbaren Bauteilen, welche relativ zueinander verstellbar und in unterschiedlichen Positionen miteinander verrastbar sind. An den äußeren Enden der Bauteile ist jeweils eine Aufnahme für den Schlauch des Bremszuges gebildet, wobei das Bremsseil bzw. die Litze durch einen Längskanal der beiden ineinandergesteckten Bauteile hindurchgeführt ist. Durch die Relativbewegung der beiden Bauteile läßt sich die gewünschte Längenveränderung der Außenhülle vornehmen. Im Falle einer selbsttätigen Nachstellung des Bremszuges bewirkt die Einstellvorrichtung mittels einer Feder, daß die beiden Bauteile außer Raststellung und nach erfolgter Relativbewegung entsprechend der vorhandenen Seillose wieder in Raststellung miteinander gelangen.

Nachteilig bei den bekannten Einstellvorrichtungen ist, daß sie bspw. im Falle eines Handbremszuges bei einem zu starken Zug am Handbremshebel überlastet werden können, so daß das Bremsseil zu stark verkürzt wird, verbunden mit einer Fehlfunktion der Handbremse. Ein weiterer Nachteil ist, daß sich die Einstellvorrichtungen nicht mehr in ihren Ausgangszustand zurückstellen lassen, was sich bei der Montage von neuen Bremszügen und insbesondere im Falle des Einbaus von neuen Bremsen bzw. Bremsbelägen am Fahrzeug und Wiederverwendung des alten Bremszuges ungünstig auswirkt.

Davon ausgehend liegt der Erfindung die Aufgabe zugrunde, eine Vorrichtung der eingangs genannten Art anzugeben, welche eine Schnellverstellung ohne die Gefahr einer Überlastung sowie eine Verstellung in den Ausgangszustand ermöglicht und bzgl. des konstruktiven Aufbaus vereinfacht ist.

Diese Aufgabe wird durch die Merkmale des Anspruchs 1 gelöst.

Durch die erfindungsgemäße Vorrichtung läßt sich eine Schnelleinstellung des Bremszuges von Hand erreichen. Hierbei werden der hohlstabförmige und der rohrförmige Teil sowie der mit dem rohrförmigen Teil verbundenen hülsenförmigen Teil gegen die Kraft der Feder auseinandergezogen, wobei die Rastmittel des hohlstabförmigen Teils unter den entsprechenden Rastmittel des Rastelementes hindurchgleiten. Nachdem die gewünschte Längenveränderung entsprechend der vorhandenen Lose des Bremsseiles vorgenommen wurde, gleitet das Rastelement unter der Kraft der Feder entlang der konischen Anlagefläche des hülsenförmigen Teils und gelangt schließlich in Raststellung mit dem hohlstabförmigen Teil. Eine Überlastung des Bremszuges ist ausgeschlossen. Dadurch, daß das hülsenförmige Teil und das rohrförmige Teil mittels eines Schraubgewindes miteinander verbunden sind, wird eine feinere Einstellung als mit der Grob- bzw. Schnellverstellung durch Herausziehen des hohlstabförmigen Teils erreicht. Die Feinverstellung ermöglicht auch eine Korrektur für den Fall, daß das hohlstabförmige Teil, bspw. um eine Rastung zu weit gegenüber dem rohrförmigen Teil herausgezogen wurde. Desweiteren ist es erfindungsgemäß vorgesehen, daß der rohrförmige Teil einen Fortsatz oder ggf. ein Zwischenstück aufweist, mittels welchem das Rastelement bei einer entsprechenden Einschraubtiefe des rohrförmigen Teils in dem hülsenförmigen Teil außer Eingriff mit den Gegenrastmitteln des hohlstabförmigen Teils gelangt. Durch Drehen des hülsenförmigen Teils in entsprechender Drehrichtung verschiebt sich der rohrförmige Teil in Richtung des Rastelementes. Schließlich gelangt der Fortsatz des rohrförmigen Teils oder sein Zwischenstück gegen die Stirnseite des Rastelementes und verschiebt es gegen die Kraft der Feder in Richtung des freien Endes des hohlstabförmigen Teils. Dabei gleitet das Rastelement mit seiner Gleitfläche entlang der konischen Anlagefläche des hülsenförmigen Teils, wobei die Rast- und Gegenrastmittel von Rastelement und hohlstabförmigem Teil außer Eingriff gelangen. Hierdurch läßt sich der hohlstabförmige Teil in eine Grundstellung in den rohrförmigen bzw. hülsenförmigen Teil einschieben. Die Möglichkeit, die Einstellvorrichtung in eine Grundstellung zurückzuführen, erweist sich dann als besonders vorteilhaft, wenn bspw. die Bremsen eines Fahrzeuges neu belegt wurden und der alte Bremszug wieder verwendet werden soll. Hierbei empfiehlt es sich zum einen, den Bremsschlauch auf seine kürzeste Länge zu bringen, um die Enden des Bremsseiles in montagetechnisch einfacher Weise an dem Bremshebel einhängen zu können. Zum anderen ist die Seillose bei neu belegten Bremsen gegenüber verschlissenen Bremsbelägen geringer, was es ebenfalls erforderlich macht, die Länge des Schlauches im Vergleich zur Schlauchlänge vor der Reparatur zu verkürzen.

In einer ersten besonderen Ausführungsform der Erfindung ist es vorgesehen, daß der hohlstabförmige Teil mit seinem einen Ende in eine Ausnehmung des rohrförmigen Teils einschiebbar ist. Im Vergleich zu einer Anordnung, bei welcher der rohrförmige Teil in eine Ausnehmung des hohlstabförmigen Teils eingreift, ist hierdurch eine kompaktere sowie kostengünstigere Bauweise erreicht.

Da die Enden des Schlauches üblicherweise in den Aufnahmen von hohlstab- und rohrförmigen Teil verpreßt sind, empfiehlt es sich nach der Erfindung, daß der hülsenförmige Teil gegenüber dem hohlstabförmigen Teil verdrehbar ist. Durch Drehen des hohlstabförmigen Teils verschiebt sich der rohrförmige Teil in axialer Richtung, ohne daß der rohrförmige Teil und damit das in seiner Aufnahme verpreßte Schlauchende bei der Längeneinstellung mit verdreht wird.

Nach einer weiteren bevorzugten Ausführungsform der Erfindung ist ein die Einschraubtiefe des rohrförmigen Teils bzgl. des hülsenförmigen Teils begrenzendes Sicherungselement vorgesehen, welches lösbar an dem hülsenförmigen Teil, vorzugsweise an dem rohrförmigen Teil gehalten ist. Hierdurch ist es sichergestellt, daß bei einer Feineinstellung das rohrförmige Teil sich in axialer Richtung nicht so weit bewegen kann, daß es mit seinem Fortsatz oder seinem Zwischenstück das Rastelement außer Eingriff mit den Gegenrastmitteln des hohlstabförmigen Teils überführen kann. Andernfalls könnte es im Betrieb zu einem Erlöschen der Bremswirkung kommen. Die Abnehmbarkeit des Sicherungselemente dient dem Zweck, durch Verschieben des rohrförmigen Teils in den hülsenförmigen bzw. in den hohlstabförmigen Teil die Rastverbindung zwischen Rastelement und hohlstabförmigen Teil aufheben und die Vorrichtung in Grundeinstellung zurückführen zu können. Bspw. kann das Sicherungselement als in eine Ringnut des rohrförmigen Teils einclipsbare Klammer ausgebildet sein. Das Sicherungselement bildet damit einen mit der Stirnseite des hülsenförmigen Teils zusammenwirkenden Anschlag. Darüber hinaus ist bei dieser Ausführungsform das Vorhandensein oder Nichtvorhandensein des Sicherungselementes für den Monteur optisch gut sichtbar.

Die Rastmittel des Rastelementes können als Rastzähne und die Gegenrastmittel des hohlstabförmigen Teils als Radialverzahnung ausgebildet sein.

Für den Einsatz der Einstellvorrichtung bei Bremszügen von Kraftfahrzeugen empfiehlt es sich, daß hohlstab-, rohr- und/oder hülsenförmiger Teil gegeneinander staub- und/oder flüssigkeitsdicht abgedichtet sind.

Dabei kann in konstruktionstechnisch vorteilhafter Weise im Bereich des freien Endes des hohlstabförmigen Teils ein, vorzugsweise in Elastomer-Metallverbund hergestellter Dichtring angeordnet sein, welcher von dem hülsenförmigen Teil mit einem umgebörtelten Rand an seinem freien Ende hintergriffen ist und gegen welche sich die auf das Rastelement wirkende Druckfeder abstützt.

Insbesondere für die Handhabung der Einstellvorrichtung in Kraftfahrzeug-Reparaturwerkstätten empfiehlt es sich, daß der rohrförmige Teil auf seinem Außenmantel eine in die Mittelstellung der Feinverstellung festlegende Markierung aufweist, wodurch ein Feinverstellen in beiden Richtung gewährleistet ist.

Der besseren Handhabung der Einstellvorrichtung dient auch die Maßnahme, daß der hülsenförmige Teil auf seinem Außenmantel eine Riffelung, Rändelung o. dgl. Mittel zur Verbesserung der Griffigkeit aufweist.

Auch ist es nach einer bevorzugten Ausführungsform der Erfindung vorgesehen, daß das hohlförmige Teil an seinem der Aufnahme gegenüberliegenden Ende einen mit dem Rastelement zusammenwirkenden Anschlag aufweist, welcher ein Herausziehen des hohlstabförmigen Teils aus der Rastverzahnung des Rastelementes verhindert und es nicht zu einem ungewollten Zerlegen der Einstellvorrichtung kommen kann. Gleichzeitig kann der Anschlag so ausgebildet sein, daß er als Führung des hohlstabförmigen Teils in der Ausnehmung des rohrförmigen Teils beim Einschieben dient.

Schließlich ist es vorgesehen, daß das Rastelement aus mehreren an der konischen Anlagefläche des hülsenförmigen Teils anliegenden Kreissegmenten besteht, welche mittels der Druckfeder in Raststellung an dem hohlstabförmigen Teil gehalten sind, was die Funktionssicherheit wesentlich verbessert.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Figur 1: in einem Längsschnitt eine mögliche Ausführungsform einer erfindungsgemäßen Vorrichtung zur Längeneinstellung eines Bremszuges in einer Grundeinstellung,
- Figur 2: die Vorrichtung gemäß Figur 1 während einer Schnellverstellung,
- Figur 3: die Einstellvorrichtung gemäß Figur 1 nach erfolgter Schnell- und Feinverstellung und
- Figur 4: die Einstellvorrichtung gemäß Figur 3 während des Rückstellvorgangs.

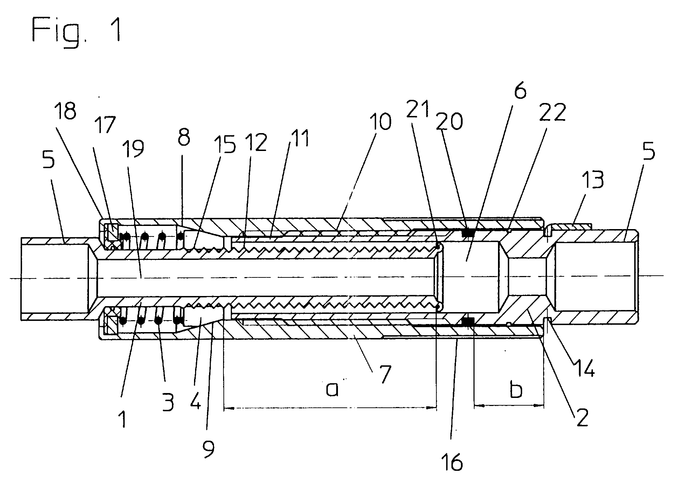

Die Einstellvorrichtung gemäß Figur 1 dient zum Einstellen der Länge eines Bremsseilzuges. Sie weist ein als Druckstange ausgebildetes hohlstabförmiges Teil 1 auf, welches mit seinem einen Ende in eine Ausnehmung 6 eines als Gewinderohr ausgebildeten rohrförmigen Teils 2 eingeschoben ist. Der Formschluß zwischen hohlstabförmigem und rohrförmigem Teil 1, 2 wird zum einen dadurch erreicht, daß bei der Montage über den hohlstabförmigen Teil 1 ein als Verriegelungsrohr ausgebildetes hülsenförmiges Teil 7 geschoben ist, in welches das rohrförmige Teil 2 mittels eines Schraubgewindes 10 eingeschraubt ist. Zum anderen erfolgt die Verbindung zwischen hülsenförmigen Teil 7 und hohlstabförmigen Teil 1 mittels eines auf den hohlstabförmigen Teil 1 aufgeschobenen Rastelementes 4, welches mittels einer sich an einem Dichtring 17 abstützenden Druckfeder 3 in einen konischen Sitz bzw. eine konische Anlagefläche 8 des hülsenförmigen Teils 7 gedrückt ist und dabei mit seinen Rastzähnen 15 in die als Radialverzahnung 12 längs des hohlstabförmigen Teils 1 ausgebildeten Gegenrastmittel eingreift. Weiterhin hintergreift das hülsenförmige Teil 7 mit seinem umgebörtelten Rand 18 den Dichtring 17.

Die nach außen gegenüber dem hülsenförmigen Teil 7 vorstehenden Enden von hohlstab- und rohrförmigen Teil 1, 2 weisen jeweils eine als Schlauchfassung ausgebildete Aufnahme 5 auf, in welchen das entsprechende Schlauchende des (nicht dargestellten) Bremsseilzuges verpreßt ist. Die Litze bzw. das Bremsseil des Bremszuges erstreckt sich durch eine zentrische durchgehende Bohrung 19 in den hohlstab- und rohrförmigen Teil 1, 2.

Um ein Eindringen von Feuchtigkeit und Staub in das Innere der Einstellvorrichtung zu verhindern, ist der hülsenförmige Teil 7 gegen den rohrförmigen Teil 2 mittels einer Ringdichtung 20 abgedichtet. Die Abdichtung zwischen hohlstabförmigem Teil 1 und hülsenförmigem Teil 7 erfolgt mittels des bereits beschriebenen Dichtrings 17, welche bei dem hier gewählten Ausführungsbeispiel in einem Gummi-Metallverbund hergestellt ist.

Wie weiterhin aus Figur 1 zu ersehen, weist das freie Ende des rohrförmigen Teils 5 eine Ringnut 14 auf, in welche ein als Klammer ausgebildetes Sicherungselement 13 einclipsbar ist. Beim Verdrehen des hülsenförmigen Teils 7 wird das rohrförmige Teil 2 in Richtung des hohlstabförmigen Teils 1 eingezogen, wobei das Sicherungselement 13 gegen die Stirnseite des hülsenförmigen Teils 7 gelangt und dadurch die Einschraubtiefe des rohrförmigen Teils 2 begrenzt.

Die Wirkungsweise der Einstellvorrichtung wird nun anhand der Figuren 1 bis 4 näher beschrieben. Figur 1 zeigt den Zustand der Einstellvorrichtung bei Anlieferung an das Montageband des Automobilherstellers, wobei sich die kurze Baulänge der Einstellvorrichtung als besonders vorteilhaft im Hinblick auf die Montage des Bremszuges erweist.

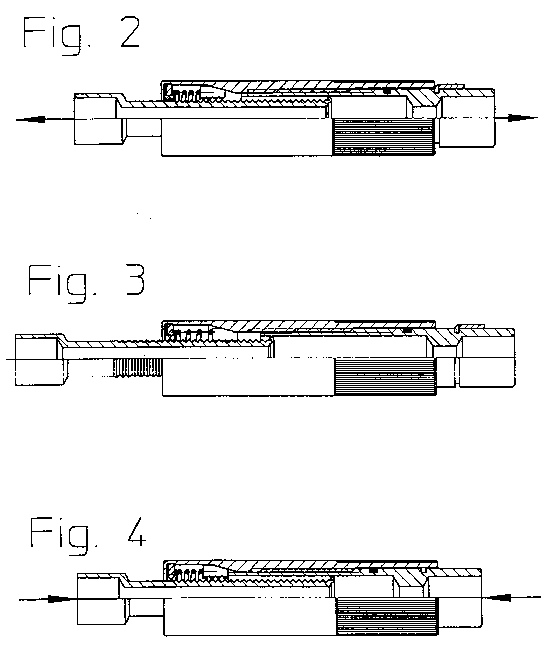

Wenn nun eine Lose im Bremsseil des fertig montierten Bremszuges vorhanden ist, was bei der Montage des Bremsseilzuges mit Einstellvorrichtung im zusammengeschobenen Zustand gemäß Figur 1 üblicherweise der Fall ist, wird diese Lose des Bremsseiles durch eine Längung des Schlauches ausgeglichen. Hierzu wird zunächst eine Schnellverstellung durch Auseinanderziehen des hohlstab- und rohrförmigen Teils 1, 2 vorgenommen, wie dies in Figur 2 angedeutet ist. Der mögliche Bereich der Längung des Schlauches bei der Schnellverstellung ist in Figur 1 durch "a" gekennzeichnet. Dabei rastet das hohlstabförmige Teil 1 mit seiner Radialverzahnung 12 über die Rastzähne 15 des Rastelementes 4, bis die Lose nahezu vollständig aus dem Bremsseil herausgenommen ist. Die noch verbleibende Lose nach der Schnellverstellung kann etwas kleiner als die Zahnbreite von Radialverzahnung 12 bzw. Rastverzahnung 15 sein. Eine entsprechende Feinverstellung läßt sich dadurch erreichen, daß das als Verriegelungsrohr ausgebildete hülsenförmige Teil 7 gegenüber dem hohlstab- bzw. rohrförmigen Teil 1, 2 verdreht wird, wodurch aufgrund des Schraubgewindes 10 zwischen hülsenförmigen Teil 7 und rohrförmigen Teil 2 letzteres axial nach außen verschoben wird, wie dies in Figur 3 dargestellt ist. Die maximale Länge der Feinverstellung ist in Figur 1 mit "b" bezeichnet.

Selbstverständlich ist es auch möglich, bei während der Schnellverstellung zu stark vorgespanntem Bremsseil Seilspannung auf ein vorgegebenes Maß zurückzuführen, indem durch Zurückdrehen des hülsenförmigen Teils in entgegengesetzter Drehrichtung die wirksame Schlauchlänge verkürzt wird. Voraussetzung dabei ist natürlich, daß in der Grundeinstellung der Einstellvorrichtung an das hülsenförmige Teil 7 sich in einer Mittelstellung des Feinverstellungsbereiches b befindet. Um diese Stellung optisch für den Monteur anzuzeigen, befindet sich auf dem rohrförmigen Teil 2 eine diesem Mittelwert entsprechende umlaufende Markierung 22.

Um das Verdrehen des hülsenförmigen Teils 7 zu erleichtern, ist an seinem Außenmantel eine Riffelung 16 vorgesehen. Weiterhin weist das hohlstabförmige Teil 1 an seinem der Aufnahme 5 gegenüberliegenden Ende einen Anschlag 21 auf, welcher bei einem Auseinanderziehen von hohlstabförmigen und rohrförmigen Teil 1, 2 in Wirkstellung mit den Rastzähnen 15 des Rastelementes 4 tritt und damit ein vollständiges Herausziehen verhindert. Gleichzeitig bildet dieser Anschlag 21 eine Führung beim Einschieben des hohlstabförmigen Teils 1 in die Aufnahme 6 des rohrförmigen Teils 2.

Die Einstellvorrichtung nach dem hier gewählten Ausführungsbeispiel läßt sich aber auch in ihren Ausgangszustand, etwa von der Stellung gemäß Figur 3 in die Stellung gemäß Figur 1 zurückführen. Hierzu wird gemäß Figur 4 das rohrförmige Teil 1 durch Verdrehen des hülsenförmigen Teils 7 in einer solchen Drehrichtung verdreht, daß das rohrförmige Teil 2 in das hülsenförmige Teil 7 mittels des Schraubgewindes 10 eingezogen wird. Dabei gelangt ein axialer Fortsatz 11 des rohrförmigen Teils 2 an die Stirnseite des Rastelementes 4, so daß das Rastelement 4 bei einem weiteren Verdrehen des hülsenförmigen Teils 7 außer Eingriff mit dem hohlstabförmigen Teil 1 tritt. Hierdurch kann das hohlstabförmige Teil 1 wieder in die Einstellvorrichtung eingeschoben werden, um den Ausgangszustand gemäß Figur 1 zu erreichen. Selbstverständlich ist vor dem Eindrehen das Sicherungselement 13 von dem rohrförmigen Teil 2 abzunehmen. Das Rückführen der Einstellvorrichtung in den Ausgangszustand erweist sich in montagetechnischer Hinsicht bei einem Neubelegen der Bremsen eines Kraftfahrzeuges und Verwendung des vorhandenen Bremsseilzuges mit Einstellvorrichtung als besonders vorteilhaft.

Die Bauteile der beschriebenen Einstellvorrichtung, insbesondere hohlstab-, rohr-, hülsenförmiges Teil 1, 2, 7 und ebenso das Rastelement 4 bestehen aus metallischem Werkstoff. Aus Gründen der Funktionssicherheit ist das Rastelement 4 aus vier Kreissegmenten gebildet.

### Bezugszeichenliste

- 1 -: hohlstabförmiges Teil
- 2 -: rohrförmiges Teil
- 3 -: Druckfeder
- 4 -: Rastelement
- 5 -: Aufnahme
- 6 -: Ausnehmung
- 7 -: hülsenförmiges Teil
- 8 -: Anlagefläche
- 9 -: Gleitfläche
- 10 -: Schraubgewinde
- 11 -: Fortsatz
- 12 -: Radialverzahnung
- 13 -: Sicherungselement
- 14 -: Ringnut
- 15 -: Rastverzahnung
- 16 -: Rändelung
- 17 -: Dichtring
- 18 -: Rand
- 19 -: Bohrung
- 20 -: Dichtring
- 21 -: Anschlag
- 22 -: Markierung

## Patentansprüche

1. Vorrichtung zur Längeneinstellung von mechanisch-flexiblen Fernbetätigungen o. dgl., insbesondere für Bremsseilzüge von Kraftfahrzeugen, mit einem hohlstabförmigen Teil (1) und einem rohrförmigen Teil (2), die ineinander schiebbar und in unterschiedlichen Einschubtiefen relativ zueinander fixierbar sind, wobei das hohlstabförmige Teil (1) an seinem freien Ende eine Aufnahme (5) für die Außenhülle des Betätigungszuges aufweist, dessen Innenzug sich durch das hohlstabförmige Teil (1) und das rohrförmige Teil (2) erstreckt, über das hohlstabförmige Teil (1) und das rohrförmige Teil (2) ein hülsenförmiges Teil (7) geschoben ist und das hülsenförmige Teil (7) zur Festlegung an dem hohlstabförmigen Teil (1) im Bereich dieses hohlstabförmigen Teils (1) eine konische Anlagefläche (8) aufweist, an der ein ringförmig ausgebildetes und über das hohlstabförmige Teil (1) geschobenes Rastelement (4) mit einer radial äußeren konischen Anlagefläche (9) gleitet und mittels einer Druckfeder (3) in Raststellung an dem hohlstabförmigen Teil (1) gehalten ist, dadurch gekennzeichnet, daß das rohrförmige Teil (2) an seinem freien Ende eine Aufnahme (5) für die Außenhülle des Betätigungszuges aufweist, die Druckfeder (3) an ihrem einem Ende bzgl. des hülsenförmigen Teils (7) festgelegt ist, das hülsenförmige Teil (7) und rohrförmige Teil (2) mittels einer Schraubverbindung (10) miteinander verbunden sind und das rohrförmige Teil (2) einen Fortsatz (11) oder ggf. ein Zwischenstück aufweist, mittels welchem das Rastelement (4) bei einer entsprechenden Einschraubtiefe des rohrförmigen Teils (2) in das hülsenförmige Teil (7) außer Eingriff mit Rastmitteln (12) des hohlstabförmigen Teils (1) gelangt.

2. Vorrichtung nach Anspruch 1, dadurch gekennzeichnet, daß der hohlstabförmige Teil (1) mit seinem einen Ende in eine Ausnehmung (6) des rohrförmigen Teils (2) einschiebbar ist.

3. Vorrichtung nach einem der Ansprüche 1 oder 2, dadurch gekennzeichnet, daß der hülsenförmige Teil (7) gegenüber dem hohlstabförmigen Teil (1) verdrehbar ist.

4. Vorrichtung nach einem oder mehreren der vorhergehenden Ansprüche, dadurch gekennzeichnet, daß ein die Einschraubtiefe des rohrförmigen Teils (2) begrenzendes Sicherungselement (13) vorgesehen ist, welches an dem hülsenförmigen Teil (7) oder an dem rohrförmigen Teil (2) lösbar gehalten ist.

5. Vorrichtung nach einem oder mehreren der vorhergehenden Ansprüche, dadurch gekennzeichnet, daß die Rastmittel (15) des Rastelementes (4) als Rastverzahnung ausgebildet und Gegenrastmittel des hohlstabförmigen Teils (1) als Radialverzahnung ausgeführt sind.

6. Vorrichtung nach einem oder mehreren der vorhergehenden Ansprüche, dadurch gekennzeichnet, daß hohlstab-, rohr- und/oder hülsenförmiger Teil (1, 2, 7) staub- und/oder flüssigkeitsdicht gegeneinander abgedichtet sind.

7. Vorrichtung nach einem oder mehreren der vorhergehenden Ansprüche, dadurch gekennzeichnet, daß im Bereich des freien Endes des hohlstabförmigen Teils (1) ein, vorzugsweise in Elastomer-Metallverbund hergestellter Dichtring (17) angeordnet ist, welcher von dem hülsenförmigen Teil (7) mit einem umgebörtelten Rand (18) an seinem freien Ende hintergriffen ist und gegen welche sich ggf. die auf das Rastelement (4) wirkende Druckfeder (3) abstützt.

8. Vorrichtung nach einem oder mehreren der vorhergehenden Ansprüche, dadurch gekennzeichnet, daß der rohrförmige Teil (2) auf seinem Außenmantel eine in die Mittelstellung der Feinverstellung festlegende Markierung (22) aufweist.

9. Vorrichtung nach einem oder mehreren der vorhergehenden Ansprüche, dadurch gekennzeichnet, daß der hülsenförmige Teil (7) auf seinem Außenmantel eine Riffelung, Rändelung (16) o. dgl. Mittel zur Verbesserung der Griffigkeit aufweist.

10. Vorrichtung nach einem oder mehreren der vorhergehenden Ansprüche, dadurch gekennzeichnet, daß das hohlstabförmige Teil (1) an seinem der Aufnahme (5) gegenüberliegenden Ende einen mit dem Rastelement (4) zusammenwirkenden Anschlag gegen Herausziehen des hohlstabförmigen Teils (1) aus Rastverzahnung (15) des Rastelementes aufweist.

11. Vorrichtung nach einem oder mehreren der vorhergehenden Ansprüche, dadurch gekennzeichnet, daß das Rastelement (4) aus mehreren an der konischen Anlagefläche (8) des hülsenförmigen Teils (7) anliegenden Kreissegmenten gebildet ist, welche mittels der Druckfeder (3) in Raststellung an dem hohlstabförmigen Teil (1) gehalten sind.

## Claims

1. Device for length adjustment of flexible mechanical remote actuators or the like, in particular for brake cable pulls of motor vehicles, with a part (1) in the shape of a hollow rod and a tubular part (2), which are pushable one into the other and fixable each relative to the other in different depths of insertion, wherein the part (1) in the shape of a hollow rod at its free end displays a receptacle (5) for the outer sleeve of the actuating pull, the inner pull of which extends through the part (1) in the shape of a hollow rod and the tubular part (2), a sleeve-shaped part (7) is pushed over the part (1) in the shape of a hollow rod and the tubular part (2) and the sleeve-shaped part (7) for fixing at the part (1) in the shape of a hollow rod displays a conical bearing surface (8), which is in the region of this part (1) in the shape of a hollow rod and at which an annularly shaped detent element (4), which is pushed over the part (1) in the shape of a hollow rod, slides by a radially outer conical bearing surface (9) and is retained in detent setting at the part (1) in the shape of a hollow rod by means of a compression spring (3), characterised thereby, that the tubular part (2) at its free end displays a receptacle (5) for the outer sleeve of the actuating pull, the compression spring (3) is fixed at its one end with respect to the sleeve-shaped part (7), the sleeve-shaped part (7) and the tubular part (2) are connected together by means of a screw connection (10) and the tubular part (2) displays a prolongation (11) or - in a given case - an intermediate member, by means of which the detent element (4) in the case of a corresponding screw-in depth of the tubular part (2) into the sleeve-shaped part (7) comes out of engagement with detent means (12) of the part (1) in the shape of a hollow rod.

2. Device according to claim 1, characterised thereby, that the part (1) in the shape of a hollow rod is insertable by its one end into a recess (6) of the tubular part (2).

3. Device according to one of the claims 1 and 2, characterised thereby, that the sleeve-shaped part (7) is rotatable relative to the part (1) in the shape of a hollow rod.

4. Device according to one or more of the preceding claims, characterised thereby, that a securing element (13) is provided, which limits the screw-in depth of the tubular part (2) and which is retained at the sleeve-shaped part (7) or at the tubular part (2) to be detachable.

5. Device according to one or more of the preceding claims, characterised thereby, that the detent means (15) of the detent element (4) are formed as detent toothing and counterdetent means of the part (1) in the shape of a hollow rod are executed as radial toothing.

6. Device according to one or more of the preceding claims, characterised thereby, that the parts (1, 2, 7), which are in the shape of a hollow rod, tube and/or sleeve, are sealed off one against the other to be dust-tight and/or liquid-tight.

7. Device according to one or more of the preceding claims, characterised thereby, that a sealing ring (17), which is preferably made in a composite of elastomer and metal and engaged behind at its free end by a beaded-over rim (18) of the sleeve-shaped part (7) and against which the compression spring (3) acting on the detent element (4) acts in a given case, is arranged in the region of the part (1) in the shape of a hollow rod.

8. Device according to one or more of the preceding claims, characterised thereby, that the tubular part (2) on its outer envelope displays a marking (22) fixing the mid-position of the fine adjustment.

9. Device according to one or more of the preceding claims, characterised thereby, that the sleeve-shaped part (7) on its outer envelope displays a grooving, knurling (16) or the like means for improving the grip.

10. Device according to one or more of the preceding claims, characterised thereby, that the part (1) in the shape of a hollow rod at its end lying opposite the receptacle (5) displays an abutment cooperating with the detent element (4) against a pulling of the part (1) in the shape of a hollow rod out of the detent toothing (15) of the detent element.

11. Device according to one or more of the preceding claims, characterised thereby, that the detent element (4) is formed of several circle segments which lie against the conical bearing surface (8) of the sleeve-shaped part (7) and which are retained in detent position at the part (1) in the shape of a hollow rod by means of the compression spring (3).

## Revendications

1. Dispositif pour régler la longueur de télécommandes mécano-flexibles ou analogues, notamment pour des câbles de freins de véhicules automobiles, comportant une partie (1) en forme de tige creuse et une partie de forme tubulaire (2), qui peuvent coulisser l'une dans l'autre et peuvent être fixées l'une par rapport à l'autre à différentes profondeurs d'insertion, la partie (1) en forme de tige creuse comportant, sur son extrémité libre, un logement (5) pour la gaine extérieure du câble d'actionnement, dont le câble intérieur s'étend dans la partie (1) en forme de tige creuse et dans la partie de forme tubulaire (2), et une partie en forme de douille (7) est emmanchée par dessus la partie en forme de tige creuse (1) et par dessus la partie de forme tubulaire (2), et la partie en forme de douille (7) comporte, pour sa fixation sur la partie (1) en forme de tige creuse, au niveau de cette partie (1) en forme de tige creuse, une surface d'application conique (8), sur laquelle un élément d'encliquetage (4) réalisé avec une forme annulaire et emmanché par dessus la partie (1) en forme de tige creuse, glisse au moyen d'une surface d'application conique extérieure du point de vue radial (9) et est retenu au moyen d'un ressort de pression (3) dans une position encliquetée contre la partie (1) en forme de tige creuse, caractérisé en ce que la partie de forme tubulaire (2) comporte sur son extrémité libre, un logement (5) pour la douille extérieure du câble d'actionnement, et que le ressort de pression (3) est fixé, par l'une de ses extrémités, sur la partie en forme de douille (76), que la partie en forme de douille (7) et la partie de forme tubulaire (2) sont reliées entre elles au moyen d'une liaison à vis (10) et que la partie de forme tubulaire (2) comporte un prolongement (11) ou éventuellement un élément intercalaire, au moyen duquel, dans le cas d'une profondeur correspondante de vissage de la partie de forme tubulaire (2) dans la partie en forme de douille (7), l'élément d'encliquetage (4) se dégage des moyens d'encliquetage (12) de la partie (1) en forme de tige creuse.

2. Dispositif selon la revendication 1, caractérisé en ce que la partie (1) en forme de tige creuse peut être insérée, par l'une de ses extrémités, dans un évidement (6) de la partie de forme tubulaire (2).

3. Dispositif selon l'une des revendications 1 ou 2, caractérisé en ce que la partie en forme de douille (7) peut être entraînée en rotation par rapport à la partie (1) en forme de tige creuse.

4. Dispositif selon une ou plusieurs des revendications précédentes, caractérisé en ce qu'il est prévu un élément de sécurité (13) qui limite la profondeur de vissage de la partie de forme tubulaire (2) et est maintenu de façon amovible sur la partie en forme de douille (7) ou sur la partie de forme tubulaire (2).

5. Dispositif selon une ou plusieurs des revendications précédentes, caractérisé en ce que les moyens d'encliquetage (15) de l'élément d'encliquetage (4) sont réalisés sous la forme d'une denture d'encliquetage et que des moyens d'encliquetage antagonistes de la partie (1) en forme de tige creuse sont agencés sous la forme d'une denture radiale.

6. Dispositif selon une ou plusieurs des revendications précédentes, caractérisé en ce que la partie (1) en forme de tige creuse, la partie tubulaire (2) et/ou la partie en forme de douille (7) sont fermées les unes par rapport aux autres d'une manière étanche vis-à-vis de la poussière et/ou d'un liquide.

7. Dispositif selon une ou plusieurs des revendications précédentes, caractérisé en ce que dans la zone de l'extrémité libre de la partie (1) en forme de tige creuse est disposée une bague d'étanchéité (17), réalisée de préférence en un composé élastomère-métal, derrière une extrémité libre de laquelle la partie en forme de douille (7) s'engage par un bord recourbé (18) et contre laquelle prend appui éventuellement le ressort de pression (3) qui agit sur l'élément d'encliquetage (4).

8. Dispositif selon une ou plusieurs des revendications précédentes, caractérisé en ce que la partie de forme tubulaire (2) comporte, sur son enveloppe extérieure, une marque (22) fixant la position médiane du déplacement précis.

9. Dispositif selon une ou plusieurs des revendications précédentes, caractérisé en ce que la partie en forme de douille (7) comporte, sur son enveloppe extérieure, un nervurage, un moletage (16) ou des moyens analogues pour améliorer la capacité de préhension.

10. Dispositif selon une ou plusieurs des revendications précédentes, caractérisé en ce que la partie (1) en forme de tige creuse comporte, sur son extrémité située à l'opposé du logement (5), une butée qui coopère avec l'élément d'encliquetage (15) et s'oppose à l'extraction de la partie (1) en forme de tige creuse hors de la denture d'encliquetage (15) de l'élément d'encliquetage.

11. Dispositif selon une ou plusieurs des revendications précédentes, caractérisé en ce que l'élément d'encliquetage (4) est formé par plusieurs segments de cercle, qui s'appliquent contre la surface d'application conique (8) de la partie en forme de douille (7) et qui sont retenus, au moyen du ressort de pression (3), dans la position encliquetée contre la partie (1) en forme de tige creuse.
